# EUROPEAN PATENT APPLICATION

(11) **EP 2 492 651 A1**
(43) Date of publication of application: **29.08.2012**
(21) Application number: 11188894.7
(22) Date of filing: 11.11.2011
(51) Int. Cl.: G01G 3/14, H04M 1/21, G06F 3/045

(54) **Weighing mobile terminal and weighing method**

(30) Priority: 22.02.2011 TW 100105887
(71) Applicant: Hon Hai Precision Industry Co., Ltd., New Taipei City (TW)
(72) Inventor: Lin, Tay-Yang, Tu-Cheng, New Taipei (TW); Chen, Chin-Feng, Tu-Cheng, New Taipei (TW); Liu, Shu-Ming, Tu-Cheng, New Taipei (TW); Shih, Chi-Tse, Tu-Cheng, New Taipei (TW); Hou, Ni-Chun, Tu-Cheng, New Taipei (TW); Hsu, Hsin-Chih, Tu-Cheng, New Taipei (TW); Du, Cheng-Hsiu, Tu-Cheng, New Taipei (TW)
(74) Representative: Gray, John James

(57) **Abstract**

A mobile terminal includes a resistive touch panel, a gravity sensing module, an obtaining module, a calculating module, and a value displaying module. The gravity sensing module is to detect a gravity direction of an object and calculate an angle between the resistive touch panel and the gravity direction. The obtaining module obtains a touch resistance when the object is placed on the resistive touch panel. The calculating module calculates a weight of the object according to the touch resistance and the angle. The value display module displays the weight on the resistive touch panel.

## Description

### Field

The present disclosure relates to mobile terminals, and particularly to, a mobile terminal capable of weighing an object placed on the mobile terminal and a weighing method.

### BackGround

People buy a lot of merchandize in daily life. Sometimes, they will weigh the merchandize or objects themselves. However, it is inconvenient for people to carry a set of scales.

Therefore, there is room for improvement within the art.

### BRIEF DESCRIPTION OF THE DRAWINGS

Many aspects of the embodiments can be better understood with reference to the following drawings. The components in the drawings are not necessarily drawn to scale, the emphasis instead being placed upon clearly illustrating the principles of the embodiments. Moreover, in the drawings, like reference numerals designate corresponding parts throughout the several views.

FIG. 1 is a schematic view of an embodiment of the weighing mobile terminal.

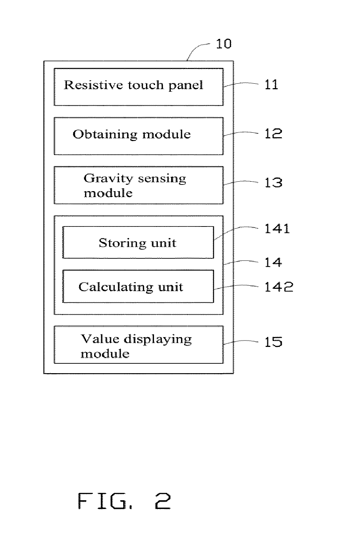

FIG. 2 is a block diagram of an embodiment of the weighing mobile terminal.

FIG. 3 is a flowchart in accordance with an embodiment of a weighing method.

### DETAILED DESCRIPTION

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

In general, the word "module", as used herein, refers to logic embodied in hardware or firmware, or to a collection of software instructions, written in a programming language, such as, Java, C, or assembly. One or more software instructions in the modules may be embedded in firmware, such as in an EPROM. The modules described herein may be implemented as either software and/or hardware modules and may be stored in any type of non-transitory computer-readable medium or other storage device. Some non-limiting examples of non-transitory computer-readable media include CDs, DVDs, BLU-RAY, flash memory, and hard disk drives.

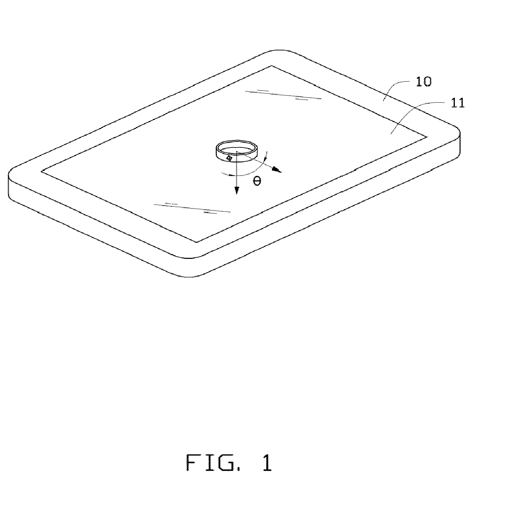

Referring to FIG. 1, a weighing mobile terminal 10 includes a resistive touch panel 11, an obtaining module 12, a gravity sensing module 13, a calculating module 14, and a value displaying module 15.

The resistive touch panel 11 includes a first electronic conduction layer and a second electronic conduction layer. The two electronic conduction layers are separated. A touch point is created when the two electronic conduction layers contact each other due to pressure.

The obtaining module 12 obtains the touch resistance of the touch point of the two electronic conduction layers. The touch resistance corresponding to the pressure attached to the resistive touch panel 11. A formula: R_{touch} =R2*(Z2/Z1-1) is satisfied. Z1 is the x-coordinate value of the touch point of the first electronic conduction layer, and Z2 is a value of the touch point along Y axis of the first electronic conduction layer, R2 is a resistance between the contact point and a negative electrode of the X axis of the second electronic conduction layer. R2 satisfies: R2=Rₓ₋ₚₐₗₜₑ*Xₚₒₛᵢₜᵢₒₙ /4096. Rₓ₋ₚₐₗₜₑ is a resistance between the positive electrode of the X axis of the second electronic conduction layer and the negative electrode of the X axis of the second electronic conduction layer. Rₓ₋ₚₐₗₜₑ is a known quantity. Xₚₒₛₜᵢₒₙ is a value of the touch point along the X axis of the second electronic conduction layer.

The gravity sensing module 13 detects a gravity direction of the object and calculate an angle between the resistive touch panel 11 and the gravity direction.

The calculating module 14 calculates the weight of the object placed on the resistive touch panel 11 according to the angle and the tough resistance. The calculating module 14 includes a storing unit 141 and a calculating unit 142. The storing unit 141 stores different pressure values corresponding to different resistances. The calculating unit 142 calculates the weight according to a pressure value and the angle, for example, formula: M=F*sinθ/g is satisfied. Wherein the pressure value is F, and the angle is θ, the weight of the object is M, and the acceleration of gravity is g. The value displaying module 15 displays the weight of the object on the resistance touch panel 11.

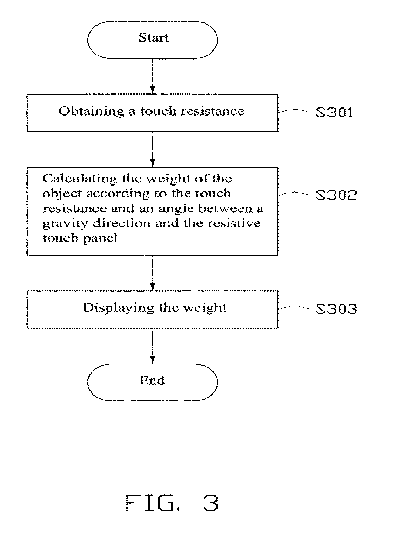

Referring to FIG. 3, a weighing method is shown. An embodiment of the method is as follows.

In step S301, the obtaining module 12 obtains a touch resistance on the touch point of the resistive touch panel 11, when an object is put on the touch panel 11.

In step S302, the calculating module 14 calculates the weight of the object according to the touch resistance and an angle between the resistive touch panel 11 and the gravity direction afforded by the touch panel 11. The process is that the calculating unit 142 selects a pressure value corresponding to the touch resistance from the storing unit 141 and calculates the weight of the object according to the pressure value and the angle.

In step S303, the value display module 15 displays the weight of the object on the resistance touch panel 11.

It is to be understood, however, that even though numerous characteristics and advantages of the embodiments have been set forth in the foregoing description, together with details of the structure and function of the embodiments, the disclosure is illustrative only, and changes may be made in detail, especially in matters of shape, size, and the arrangement of parts within the principles of the present disclosure to the full extent indicated by the broad general meaning of the terms in which the appended claims are expressed.

Depending on the embodiment, certain of the steps of a method(s) described may be removed, others may be added, and the sequence of steps may be altered. It is also to be understood that the description and the claims drawn for a method may include some indication in reference to certain steps. However, the indication used is only to be viewed for identification purposes and not as a suggestion as to an order for the steps.

## Claims

1. A weighing mobile terminal, comprising:
a resistive touch panel;
a gravity sensing module to detect a gravity direction of an object to be placed on the resistive touch panel and calculate an angle between the resistive touch panel and the gravity direction;
an obtaining module to obtain a touch resistance when the object is placed on the resistive touch panel;
a calculating module to calculate a weight of the object according to the touch resistance and the angle; and
a value displaying module to display the weight on the resistive touch panel.

2. The weighing mobile terminal of claim 1, wherein the calculating module comprises a storing unit and a calculating unit; the storing unit is to store pressure values corresponding to different resistances; and the calculating unit is to calculate the weight according to a pressure value corresponding to the touch resistance and the angle.

3. The weighing mobile terminal of claim 2, wherein the calculating module is to calculate the weight according to a formula: M=F*sinθ/g, wherein M is the weight, F is the pressure value, θ is the angle, and g is acceleration of gravity.

4. A weighing method, applied in a mobile terminal, comprising:
obtaining a touch resistance of a resistive touch panel of the mobile terminal when an object is placed on the resistive touch panel;
sensing an angle between the resistive touch panel and the gravity direction;
calculating a weight of the object according to the touch resistance and the angle; and
displaying the weight on the resistive touch panel.

5. The weighing method of claim 4, wherein the calculating the weight comprises: selecting a pressure value stored in the mobile terminal corresponding to the touch resistance and calculating the weight according the pressure value and the angle.

6. The weighing method of claim 5, wherein the calculating the weight comprises using a formula: M=F*sinθ/g to calculate the weight, wherein M is the weight, F is the pressure value, θ is the angle, and g is acceleration of gravity.

7. A weighing method comprising:
providing a mobile terminal, the mobile terminal comprising a resistive touch panel, a gravity sensing module, an obtaining module, a calculating module, and a value displaying module;
obtaining a touch resistance of the resistive touch panel by the obtaining module when an object is placed on the resistive touch panel;
sensing an angle between the resistive touch panel and the gravity direction by the gravity sensing module;
calculating a weight of the object according to the touch resistance and the angle by the calculating module; and
displaying the weight on the resistive touch panel by the value displaying module.

8. The weighing method of claim 7, wherein the calculating the weight comprises: selecting a pressure value stored in the mobile terminal corresponding to the touch resistance and calculating the weight according the pressure value and the angle.

9. The weighing method of claim 8, wherein the calculating the weight comprises using a formula: M=F*sinθ/g to calculate the weight, wherein M is the weight, F is the pressure value, θ is the angle, and g is acceleration of gravity.
